# EUROPEAN PATENT APPLICATION

(11) **EP 4 760 365 A1**
(43) Date of publication of application: **17.06.2026**
(21) Application number: 25195525.8
(22) Date of filing: 12.08.2025
(51) Int. Cl.: G02B 6/02, G02B 6/036

(54) **AN OPTICAL FIBER WITH IMPROVED STRENGTH**

(30) Priority: 09.09.2024 IN 202411067870
(71) Applicant: Sterlite Technologies Limited, Gurugram, Haryana 122102 (IN)
(72) Inventor: KAPOOR, Saurabh, 122102 Gurugram (IN); MUNIGE, Srinivas, 122102 Gurugram (IN)
(74) Representative: Valet Patent Services Limited

(57) **Abstract**

The present disclosure provides an optical fiber (10) comprising one or more glass cores (12, 12₁, 12₂, 12₃, 12₄) extending along a length of the optical fiber (10) and a glass cladding (14) with a peripheral region (16), one or more interface regions (18, 18₁, 18₂, 18₃, 18₄) and one or more intermediate regions (20, 20₁, 20₂, 20₃, 20₄). The optical fiber (10) comprises an alumina (Al₂O₃) doping in the entire glass cladding (14) or at least one of the peripheral region (16), the one or more interface regions (18, 18₁, 18₂, 18₃, 18₄) and the one or more intermediate regions (20, 20₁, 20₂, 20₃, 20₄), provided that, when the optical fiber (10) comprises a single glass core (12), the alumina doping in the intermediate regions (20, 20₁, 20₂, 20₃, 20₄) is distributed among multiple intermediate regions (20, 20₁, 20₂, 20₃, 20₄) or included in combination with alumina doping in at least one of the peripheral region (16) and the one or more interface regions (18, 18₁, 18₂, 18₃, 18₄).

## Description

### TECHNICAL FIELD

Embodiments of the present disclosure relate to the field of wireless communication networks of optical fibres, and in particular, relates an optical fiber with improved strength.

The present application claims the benefit of Indian Application No. IN202411067870 titled "AN OPTICAL FIBER WITH IMPROVED STRENGTH" filed by the applicant on September 9, 2024, which is incorporated herein by reference in its entirety.

### Background Art

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fiber refers to the technology and the medium for the transmission of data as light pulses along an ultrapure strand of glass, which is as thin as a human hair. For many years, optical fibers have been extensively used in high-performance and long-distance data and networking.

Telecommunication cables are ubiquitous and used for distributing all manner of data across vast networks. The majority of cables are electrically conductive cables (typically copper), although the use of optical fiber cable is growing rapidly in telecommunication systems as larger and larger amounts of data are transmitted. Additionally, as data transmissions increase, the fiber optic network is being extended closer to the end user which can be a premise, business, or a private residence.

Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

Optical fibers designed for telecommunication application are typically made of glass, which is susceptible to breakage under stress and to uncontrolled diffusion of cations and anions which are present in the optical fibers as dopants and/or impurities. The charged species in the glass can arise internally from the manufacturing process itself or from the external environment during operation may diffuse into the core region (light guiding region) during manufacturing or subsequent processing. Therefore, owing to the above and other factors such as environmental conditions, such as temperature variations or exposure to certain chemicals, traditional optical fiber manufacturing face challenges related to the uncontrolled diffusion of impurities and dopants towards the core region, which degrades the optical performance of the optical cable and also reduces the reproducibility of the diffusion-based process.

Prior art reference WO2023034237A1 address the issue of hydrogen penetration has been the inclusion of intra-cladding barrier layers acting as a diffusion barrier. While such designs have shown promise in preventing the diffusion of hydrogen towards the core, there remains a need for improved control over dopant diffusion to enhance optical fiber performance and mechanical reliability.

Further, the manufacturing of optical fibers involves multiple process steps, including the preparation of optical fiber preforms from which the fibers are drawn.

Existing methods for preparing optical fiber preforms, such as the insertion of core rods or down doping techniques, have limitations in controlling dopant diffusion. In particular, the ingress of dopants towards the core region during preform preparation can lead to inconsistencies in optical performance.

Furthermore, reduced diameter optical fibers, while desirable for certain applications due to their smaller footprint, face additional challenges. These fibers often exhibit lower fatigue resistance and increased susceptibility to breakage under load in comparison to standard 125 µ fiber. Additionally due to lower clad diameter, reduced diameter optical fibers with mixed doping profiles lack the ability to effectively control dopant diffusion within the core region, further hindering their optical performance.

Accordingly, to overcome the disadvantages of the prior arts, there is a need for a technical solution that overcomes the above-stated limitations in the prior arts. Therefore, the present disclosure discloses a method and apparatus that can provide improved control over dopant diffusion during optical fiber manufacturing, particularly for reduced diameter fibers, to enhance mechanical strength, and reliability.

### SUMMARY OF THE DISCLOSURE

Embodiments of the present disclosure relates to an optical fiber comprising one or more glass cores extending along a length of the optical fiber and a glass cladding surrounding the one or more glass cores. In particular, the glass cladding comprises a peripheral region, one or more interface regions that interfaces with the one or more glass cores and one or more intermediate regions located between the peripheral region and the one or more interface regions. Further, the optical fiber comprising alumina (Al2O3) doping in the entire glass cladding or at least one of the peripheral region, the one or more interface regions and the one or more intermediate regions provided that, when the optical fiber comprises a single glass core, the alumina doping in the intermediate regions is distributed among one of multiple intermediate regions or included in combination with alumina doping in at least one of the peripheral region and the one or more interface regions.

According to the first aspect of the present disclosure, the optical fiber includes a glass core and glass cladding such that the glass core is surrounded by an alumina doped region and a peripheral region of the glass cladding is doped with alumina.

According to the second aspect of the present disclosure, one or more glass cores comprises at least one of a single glass core extending along a central axis of the optical fiber or a plurality of glass cores. In particular, each of the plurality of glass core being arranged on a cross section perpendicular to the central axis of the optical fiber. Alternatively, the plurality of glass cores comprising a first glass core extending along a central axis of the optical fiber, and each of a remaining of the plurality of glass cores arranged on a cross section perpendicular to the central axis of the optical fiber.

In accordance with an embodiment of the disclosure, a concentration of alumina in the alumina doped region up to 8 mol%

According to the third aspect of the present disclosure, a primary coating layer surrounding a peripheral region of the glass cladding and a secondary coating layer surrounding the primary coating layer. In particular, the thickness of the primary coating layer, as measured in a radial direction, being in the range of 4 µm to 20 µm and a thickness of the secondary coating layer, as measured in the radial direction, being in the range of 4 µm to 20 µm.

The absolute difference between relative refractive indexes of the peripheral region of the glass cladding and the primary coating layer is less than or equal to 0.2%.

According to the fourth aspect of the present disclosure, the absolute difference between relative refractive indexes of the peripheral region of the glass cladding and the primary coating layer is less than 0.2% enables the optical fiber to achieve low bend losses.

According to the fifth aspect of the present disclosure, a diameter of the optical fiber excluding a thickness of the primary coating layer and a thickness of the secondary coating layer is in the range of 60 µm to 125 µm with a tolerance of ± 0.7 µm. Further, a diameter of the optical fiber including a thickness of the primary coating layer and a thickness of the secondary coating layer is in the range of 100 µm to 250 µm.

In accordance with an embodiment of the disclosure, when the optical fiber comprises alumina doping at the one or more interface regions or at the one or more intermediate regions, the optical fiber comprises a down-doping agent doped at the peripheral region.

In another embodiment of the present disclosure, when the optical fiber comprises alumina doping at the one or more interface regions or at the peripheral region, the optical fiber comprises one or more intermediate regions comprising at least one down-doping agent.

In yet another embodiment of the present disclosure, when the optical fiber comprises, alumina doping at the one or more interface regions or at the one or more intermediate regions or at the peripheral region, the optical fiber comprises at least one down-doped region or at least one up-doped region or at least one non-doped region in the glass cladding.

According to the sixth aspect of the present disclosure, the optical fiber has at least one of: a mode field diameter (MFD) being in a range of 8.2 µm to 9.5 µm at a wavelength of 1310 nm, an attenuation of less than or equal to 0.2 dB/KM at a wavelength of 1550 nm, and a macro bend loss of less than or equal to 0.5 dB/turn at a bend radius of 7.5mm at a wavelength of 1625 nm.

Another embodiment of the present disclosure provides a process for making the optical fiber comprises steps of
providing one or more glass cores extending along a length of the optical fiber,
providing a glass cladding surrounding the one or more glass cores, the glass cladding comprising a peripheral region, one or more interface regions that interfaces with the one or more glass cores; and one or more intermediate regions located between the peripheral region and the one or more interface regions and
doping the optical fiber such that the entire glass cladding is doped with alumina or at least one of the peripheral region is doped with alumina, the one or more interface regions is doped with alumina and the one or more intermediate regions is doped with alumina, provided that, when the optical fiber comprises a single glass core, the alumina doping in the intermediate regions is distributed among multiple intermediate regions or included in combination with alumina doping in at least one of the peripheral region and the one or more interface regions.

According to the seventh aspect of the present disclosure, an intermittently bonded optical fiber ribbon comprising plurality of optical fiber as disclosed in the disclosure.

The foregoing objectives of the present disclosure are attained by employing an optical fiber with improved strength.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a cross-sectional view of an optical fiber in accordance with an embodiment of the present disclosure;
Fig. 2 is a pictorial snapshot illustrating a cross-sectional view of an optical fiber in accordance with an embodiment of the present disclosure;
Fig. 3 is a pictorial snapshot illustrating a cross-sectional view of an optical fiber in accordance with another embodiment of the present disclosure;
Fig. 4 is a pictorial snapshot illustrating a cross-sectional view of an optical fiber in accordance with an embodiment of the present disclosure;
Fig. 5 is a pictorial snapshot illustrating a cross-sectional view of an optical fiber in accordance with an embodiment of the present disclosure.

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

Optical fiber- a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

OFig. 1, which is a pictorial snapshot illustrating a cross-sectional view of an optical fiber (10), in accordance with an embodiment of the present disclosure. The optical fiber (10) generally comprises a glass core (12) and a glass cladding (14). In particular, the glass core (12) is the innermost cylindrical structure present in the center of the optical fiber (10), which is configured to guide the light rays inside the optical fiber (10). Moreover, the glass core (12) of the optical fiber (10) is defined by a central axis passing through a center of the optical fiber (10) and the glass core (12) is defined by a core radius (Rc). Further, the core radius (Rc) is in a range of 4 µm and 5 µm.

In accordance with an embodiment of the present disclosure, the glass core (12) is defined by a core delta (ΔC) value (i.e., a relative refractive index difference between the glass core (12) and the glass cladding (14)). In particular, the core delta (ΔC) value is in a range of 0.58% to 0.65%.

Further, the optical fiber (10) comprises a glass cladding (14) defined as one or more layered structure surrounding the glass core (12) of an optical fiber (10) from the outside and the glass cladding is defined by a cladding radius (Rclad). In an aspect of the disclosure, the cladding radius (Rclad) is in a range of 40 µm to 62.5 µm.

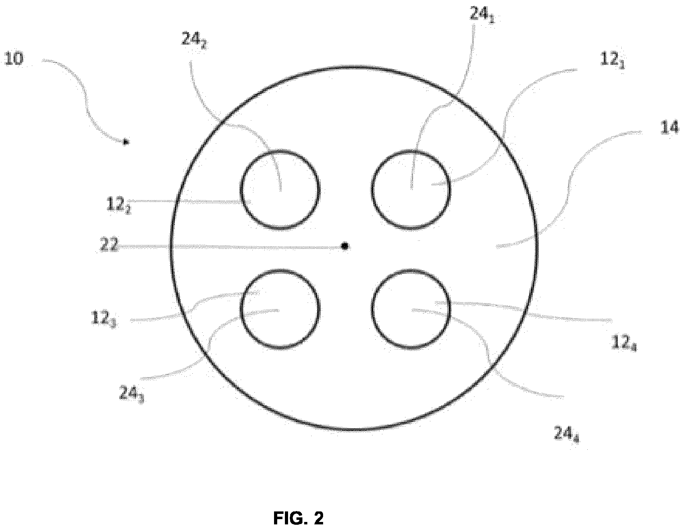

Fig. 2, which is a pictorial snapshot illustrating a cross-sectional view of an optical fiber (10), in accordance with another embodiment of the present disclosure. The optical fiber (10) comprises a plurality of glass core (12₁, 12₂, 12₃, 12₄) and a glass cladding (14). In particular, each of the plurality of glass core (12₁, 12₂, 12₃, 12₄) is arranged on a cross section (24₁, 24₂, 24₃, 24₄) parallel to a central axis (22) of the optical fiber (10).

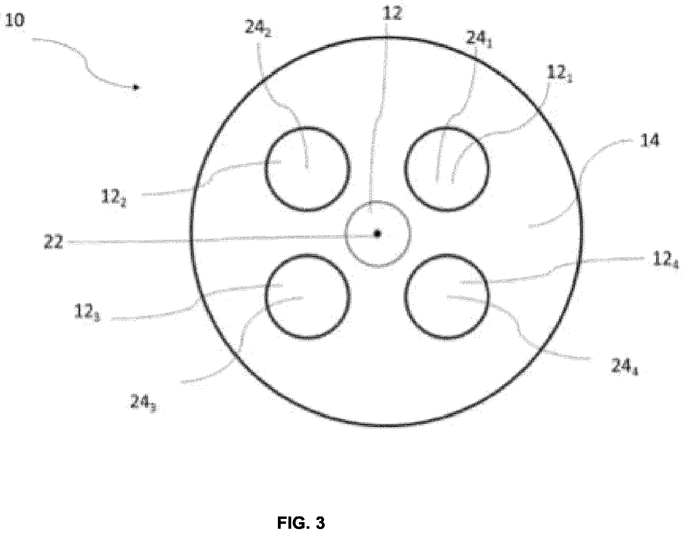

Fig. 3, which is a pictorial snapshot illustrating a cross-sectional view of an optical fiber, in accordance with another embodiment of the present disclosure. In particular, a plurality of glass cores (12, 12₁, 12₂, 12₃, 12₄) comprising a first glass core (12) extending along a central axis (22) of the optical fiber (10), and each of a remaining of the plurality of glass cores (12₁, 12₂, 12₃, 12₄) arranged on a cross section (24₁, 24₂, 24₃, 24₄) parallel to the central axis (22) of the optical fiber (10).

Further, each glass core (12, 12₁, 12₂, 12₃, 12₄) functions like a single-core fiber, guiding light signals through total internal reflection. The glass cladding (14) surrounds all the glass cores (12, 12₁, 12₂, 12₃, 12₄) maintaining the necessary conditions for total internal reflection in each glass core (12, 12₁, 12₂, 12₃, 12₄).

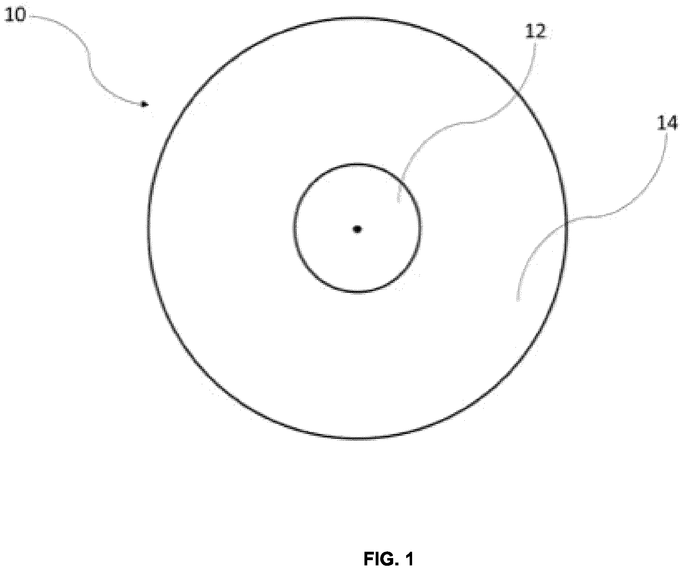

Referring to Fig. 1, 2 and 3, the glass core (12) is defined by a refractive index value. In particular, the refractive index measures how much light a material refracts. Moreover, the glass core (12) is made of silica glass, in which an up-dopant such as germanium, chlorine and the like is introduced for increasing the refractive index of the glass core. Further, this increment of refractive index by addition of doping material is termed as up-doping. In an aspect of the disclosure, the core is a silica glass core (12) and in particular up-doped silica glass core (12).

In accordance with an embodiment of the present disclosure, the glass core (12) is doped with Germanium. Alternatively in another embodiment of the present disclosure, the glass core is doped with Chlorine.

In accordance with an embodiment of the present disclosure, the optical fiber may be defined by a cladding. In particular, the glass cladding is configured to possess a lower refractive index than the refractive index of the glass core to facilitate total internal reflection of light rays inside the optical fiber.

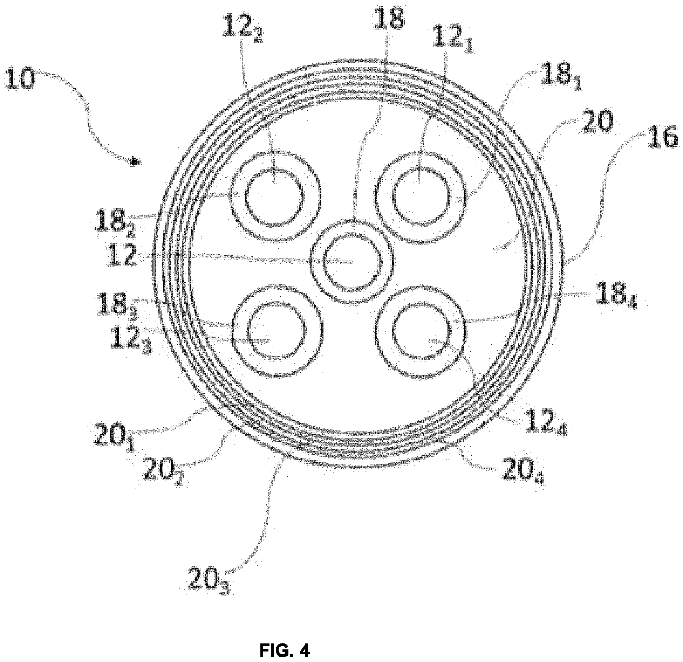

Fig. 4 is a pictorial snapshot illustrating a cross-sectional view of an optical fiber in accordance with an embodiment of the present disclosure. In particular, the glass cladding (14) is defined by a peripheral region (16), one or more interface regions (18, 18₁, 18₂, 18₃, 18₄) (i.e., buffer region) that interfaces with the one or more glass cores (12, 12₁, 12₂, 12₃, 12₄) and one or more intermediate regions (20, 20₁, 20₂, 20₃, 20₄) (i.e., mid cladding regions) located between the peripheral region (16) (i.e., outermost glass cladding region) and the one or more interface regions (18, 18₁, 18₂, 18₃, 18₄). Further, the peripheral region (16) is defined as an outermost region of the glass cladding (14) having greater relative refractive index as compared to the relative refractive index of pure silica.

In accordance with an embodiment of the present disclosure, the optical fiber (10) comprising alumina (Al₂O₃) doping in the entire glass cladding (14) or at least one of the peripheral region (16), the one or more interface regions (18, 18₁, 18₂, 18₃, 18₄) and the one or more intermediate regions (20, 20₁, 20₂, 20₃, 20₄) subject to the condition that when the optical fiber (10) comprises a single glass core (12) as shown in Fig. 3, the alumina doping in the intermediate regions (20, 20₁, 20₂, 20₃, 20₄) is either distributed among multiple intermediate regions (20, 20₁, 20₂, 20₃, 20₄) or combined with alumina doping in at least one of the peripheral region (16) and the one or more interface regions (18, 18₁, 18₂, 18₃, 18₄).

In accordance with an embodiment of the present disclosure, the alumina (Al₂O₃) doping in the reduced diameter optical fiber improves the mechanical behaviour of the glass along with an increase in chemical durability in comparison to pure silica. Further, the alumina (Al₂O₃) doping enhances the strength of the fiber simultaneously improving the stress induced corrosion and aids in maintaining the required waveguide parameter of the optical fiber.

In accordance with an embodiment of the present disclosure, when the optical fiber (10) comprises, alumina doping in at least one of the peripheral region (16), one or more interface regions (18, 18₁, 18₂, 18₃, 18₄) and one or more intermediate regions (20, 20₁, 20₂, 20₃, 20₄), a thickness of a single alumina doped region, as measured in the radial direction, is less than or equal to 10 µm.

In accordance with an embodiment of the present disclosure, the thickness of a single alumina doped region, as measured in the radial direction, is less than or equal to 7 µm.

In accordance with an embodiment of the present disclosure, the thickness of a single alumina doped region, as measured in the radial direction, is less than 5 µm.

In accordance with an embodiment of the present disclosure, a concentration of alumina in the alumina doped region is less than or equal to 8 mol%.

In accordance with an embodiment of the present disclosure, the concentration of alumina in the alumina doped region is less than or equal to 6 mol%. When the concentration of alumina in the alumina doped region is greater than 8 mol%, the combined material behaviour of both SiO2 and Al2O3 become like oil and water i.e., immiscible liquid. In an aspect of the disclosure, a relative refractive index of the single alumina doped region is in a range of 0.2% to 0.45%.

In accordance with an embodiment of the present disclosure, the peripheral region (16), one or more interface regions (18, 18₁, 18₂, 18₃, 18₄), and one or more intermediate regions (20, 20₁, 20₂, 20₃, 20₄) may be a one of buffer region, a trench region formed by down doping and a ridge region formed by up-doping.

In accordance with an embodiment of the present disclosure, the optical fiber (10) comprises a trench region in the one or more intermediate regions (20, 20₁, 20₂, 20₃, 20₄) such that the trench region is defined by a trench radius (Rtrench). In particular, the trench radius (Rtrench) is in a range of 15 µm to 17 µm. Moreover, the trench region is defined by a trench delta (Δ_{T}) value (i.e., a relative refractive index difference between the trench region and the cladding (14)). Further, the trench delta (Δ_{T}) is in a range of 0.35% to 0.55%.

In accordance with an embodiment of the present disclosure, the optical fiber (10) includes alumina doping at various regions such as interface (18, 18₁, 18₂, 18₃, 18₄), intermediate (20, 20₁, 20₂, 20₃, 20₄), or peripheral region (16), combined with down-doping agents at specified regions. These configurations enhance the fiber's performance by optimizing refractive index control, reducing signal attenuation and improving mechanical stability.

In accordance with an embodiment of the present disclosure, the optical fiber comprises alumina doping at one or more interface regions (18, 18₁, 18₂, 18₃, 18₄) or at one or more intermediate regions (20, 20₁, 20₂, 20₃, 20₄). Additionally, the optical fiber includes a down-doping agent at the peripheral region (16). This configuration ensures that the outermost layer of the optical fiber has a reduced refractive index, enhancing the light propagation characteristics and reducing signal loss. The alumina doping in the interface or intermediate regions (20, 20₁, 20₂, 20₃, 20₄) improves the mechanical strength and thermal stability of the fiber. In an aspect of the disclosure, one or more intermediate regions (20, 20₁, 20₂, 20₃, 20₄) is defined by a buffer cladding radius (Rbuffer) is in a range of 35 µm and 58 µm.

In another embodiment, the optical fiber comprises alumina doping at one or more interface regions (18, 18₁, 18₂, 18₃, 18₄) or at the peripheral region (16). The optical fiber further includes one or more intermediate regions (20, 20₁, 20₂, 20₃, 20₄) comprising at least one down-doping agent. This ensures that the intermediate regions (20, 20₁, 20₂, 20₃, 20₄), situated between the glass core (12) and the outer layers, have a modified refractive index profile. In particular, the alumina doping enhances the structural integrity and durability of the fiber, while the down-doping in the intermediate regions (20, 20₁, 20₂, 20₃, 20₄) optimizes light confinement and reduces attenuation. Moreover, when the optical fiber (10) has a radius (i.e., glass radius) in a range of 38 µm to 42 µm, the peripheral region (16) of the glass cladding (14) has a thickness in a range of 3 µm to 6 µm. Further, when the optical fiber (10) has a radius (i.e., glass radius) in a range of 61 µm to 63 µm, the peripheral region (16) of the glass cladding (14) has a thickness in a range of 4 µm to 8 µm.

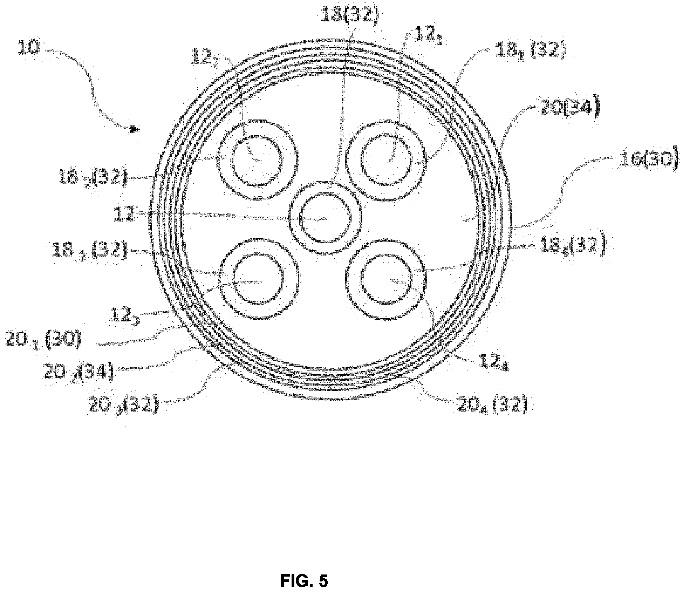

In accordance with an embodiment of the present disclosure, the optical fiber comprises alumina doping at one or more interface regions (18, 18₁, 18₂, 18₃, 18₄), at one or more intermediate regions (20, 20₁, 20₂, 20₃, 20₄), or at the peripheral region (16), also shown in Fig. 5. In particular, the glass cladding of the optical fiber comprises at least one down-doped region (30), at least one up-doped region (32), or at least one non-doped region (34). This allows for a versatile and customizable optical fiber design. By providing options for down-doping region (30), up-doping region (32), or maintaining a non-doped region (34) in the glass cladding (14), this condition addresses various performance needs such as controlling the dispersion properties, enhancing the strength, and fine-tuning the refractive index gradient so that the optical fiber (10) having reduced diameter can meet and exceed the waveguide parameters of ITU G657 along with significant improvement in overall strength of the optical fiber (10) as well as reduction in bend losses.

In accordance with an embodiment of the present disclosure, the addition of up-dopant such as alumina in the peripheral region (16), one or more interface regions (18, 18₁, 18₂, 18₃, 18₄) and one or more intermediate regions (20, 20₁, 20₂, 20₃, 20₄) increase the refractive index of the peripheral region (16), one or more interface regions (18, 18₁, 18₂, 18₃, 18₄) and one or more intermediate regions (20, 20₁, 20₂, 20₃, 20₄) respectively. In particular, the addition of down dopant such as fluorine in the peripheral region (16), one or more interface regions (18, 18₁, 18₂, 18₃, 18₄) and one or more intermediate regions (20, 20₁, 20₂, 20₃, 20₄) decreases the refractive index of the peripheral region (16), one or more interface regions (18, 18₁, 18₂, 18₃, 18₄) and one or more intermediate regions (20, 20₁, 20₂, 20₃, 20₄) respectively. Moreover, the one or more interface regions (18, 181, 182, 183, 184) surrounding each of the plurality of glass core (121, 122, 123, 124) are identified by rapid transitioning of the refractive index or a major change in the refractive index of the alumina doped one or more interface regions (18, 181, 182, 183, 184) as compared to the refractive index of the plurality of glass core (121, 122, 123, 124). After the outer boundary of the plurality of glass core (121, 122, 123, 124), the one or more interface regions (18, 181, 182, 183, 184) starts. Further, the addition of up-dopants such as alumina in the peripheral region (16) increase the relative refractive index of the peripheral region (16) as compared to the un doped region of the glass cladding (14). Because of an increase in the relative refractive index in the outermost region of the glass cladding (14), the entire region of the peripheral region (16) having alumina doping can be identified. The identification of different regions such as the plurality of glass core (121, 122, 123, 124), one or more interface regions (18, 181, 182, 183, 184), one or more intermediate regions (20, 201, 202, 203, 204), and the peripheral region (16) are done using Electron Probe Micro Analyzer (EPMA) method.

The optical fiber of the present disclosure is defined by optimized values of parameters such as Mode Field Diameter or MFD and Macro-bending loss. The Mode Field Diameter in an optical fiber may be defined as a section of fiber where most of the light energy travels. The Mode Field Diameter represents an effective diameter of the light mode propagating through the optical fiber. The Mode Field Diameter is analogous to a measurement of a beam diameter for a beam propagating in free space. Further, a value of the Mode Field Diameter is twice the value of a mode field radius. In an embodiment of the disclosure, the optical fiber has at least one of a Mode Field Diameter (MFD) is in a range of 8.2 to 9.5 µm at a wavelength of 1310 nm and an attenuation is less than 0.2 dB/KM at 1550 nm wavelength. In general, attenuation is reduction in power of a light signal as it is transmitted or travels through the glass core (12).

In accordance with an embodiment of the present disclosure, the optical fiber (10) experiences the macrobending loss. In particular, the macro-bending loss occurs when the fiber cable is subjected to a significant amount of bending over a critical value of curvature. Moreover, the environmental changes may also cause macrobending loss. Further, the optical fiber (10) has stringent macro-bending properties which enable the optical fiber to be used in intermittently bonded ribbon cables. Furthermore, the optical fiber (10) has at least one of a macro bend loss of 0.2 dB/turn at a bend radius of 7.5 mm and a wavelength of 1550 nm and a macro bend loss 0.5 dB/turn at a bend radius of 7.5 mm and a wavelength of 1625 nm. The aforementioned values help in achieving the stringent macro-bend performance of the optical fiber.

In accordance with an embodiment of the present disclosure, the present disclosure discloses an optical fiber with reduced glass diameter in the range of 60-125 µm with a tolerance of 0.7 µm, wherein the glass diameter is of a bare glass optical fiber excluding coatings.

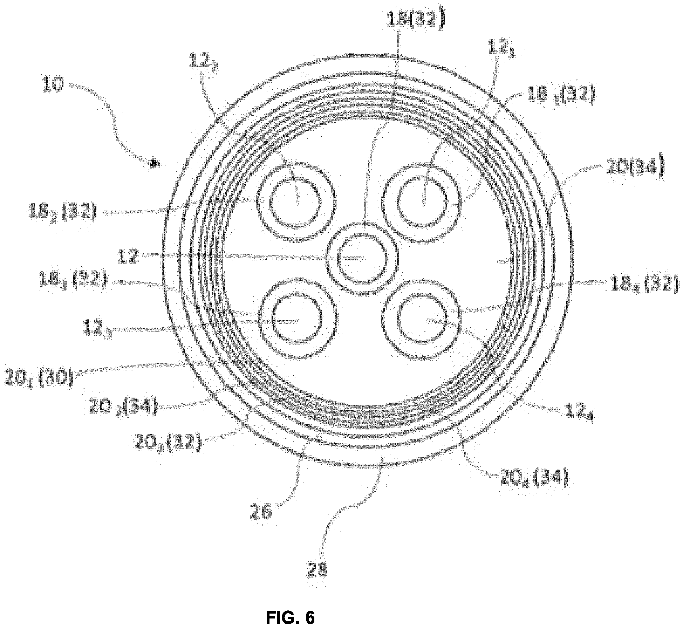

In accordance with an embodiment of the present disclosure, the optical fiber is coated with at least one coating layer. Alternatively, the optical fiber is coated with a primary coating (26) and a secondary coating (28) as shown in Fig. 6. In yet another embodiment of the disclosure, the optical fiber (10) is coated with a primary coating (26), a secondary coating (28) and a colored coating. In yet another embodiment, the optical fiber is coated with a primary coating (26) and a secondary coating (28) such that the secondary coating (28) being a colored coating.

In accordance with an embodiment of the present disclosure, the thickness of the primary coating (26) and secondary coating (28) is less than 20 µm.

In another embodiment, the thickness of the primary coating (26) is in a range of 4 µm to 20 µm as measured in radial direction.

In another embodiment, the thickness of the secondary coating (28) is in a range of 4 µm to 20 µm as measured in radial direction.

In accordance with an embodiment of the present disclosure, the diameter of the coated optical fiber is in the range of 100 µm to 250 µm. In an aspect of the disclosure, the diameter of the coated optical fiber is in the range of 130 µm to 200 µm. When the diameter of the coated optical fiber is less than or equal to 130 µm, the glass diameter of the optical fiber (10) is in a range of 60 µm to 80 µm, a thickness of the peripheral region (16) is in a range of 3 µm to 7 µm and the concentration of alumina (Al2O3) in the peripheral region is less than or equal to 6 mol%. When the diameter of the coated optical fiber is less than or equal to 170 µm, the glass diameter of the optical fiber (10) is in a range of 100 µm to 125 µm, a thickness of the peripheral region (16) is in a range of 4 µm to 8 µm and the concentration of alumina (Al2O3) in the peripheral region is less than or equal to 5 mol%. When the diameter of the coated optical fiber is less than or equal to 200 µm, the glass diameter of the optical fiber (10) is less than or equal to 125 + 0.7, a thickness of the peripheral region (16) is in a range of 4 µm to 8 µm and the concentration of alumina (Al2O3) in the peripheral region is less than or equal to 4 mol%.

In accordance with an embodiment of the present disclosure, the optical fiber specifications vary based on the fiber diameter. For the 250 micron fiber, the glass diameter is 125.0 ± 0.7 µm, with the primary coating (26) surrounding the glass having a diameter of 190 ± 5 µm, and the secondary coating (28) having a diameter of 242 ± 5 µm. The glass diameter of the optical fiber is defined as a diameter of the glass cladding region 14. In another embodiment for the 200 micron fiber, the glass diameter remains at 125.0 ± 0.7 µm, while the primary coating's diameter is 155 ± 5 µm, and the secondary coating's diameter is 190 ± 10 µm. For the 180 micron fiber, the glass diameter is also 125.0 ± 0.7 µm, with the primary coating's diameter being 140 ± 5 µm and the secondary coating's diameter being 175 ± 5 µm. Another embodiment for the 160 micron fiber retains the glass diameter of 125.0 ± 0.7 µm, with the primary coating's diameter at 130 ± 5 µm and the secondary coating's diameter at 155 ± 5 µm. In a further embodiment for the 100 micron fiber, the glass diameter is reduced to 70 ± 10 µm, and the combined coating diameter, which includes both the primary and secondary coatings, is 95 ± 5 µm.

In accordance with an embodiment of the present disclosure, a difference in relative refractive index of the cladding (14) and relative refractive index of the coating (26, 28) is significantly big which helps in achieving the optimized optical properties of the optical fiber (10). In an embodiment of the disclosure, the absolute difference of the relative refractive indices between the peripheral region (16) and at least one coating layer is less than 0.2%. The absolute difference of the relative refractive indices between the peripheral region (16) and at least one coating layer is less than 0.2% enables the optical fiber (10) to achieve low bend loss and high coating efficiency.

In accordance with an embodiment of the present disclosure, a Young's Modulus of the primary coating (26) is in a range of 0.1 MPa to 0.5 MPa and Young's modulus of the secondary coating (28) is in a range of 1200 MPa to 1500 MPa.

In accordance with an embodiment of the present disclosure, a process for making the optical fiber (10) comprises providing one or more glass cores (12, 12₁, 12₂, 12₃, 12₄) extending along a length of the optical fiber (10). Then providing a glass cladding (14) surrounding the one or more glass cores (12, 12₁, 12₂, 12₃, 12₄). The glass cladding (14) comprises a peripheral region (16), one or more interface regions (18, 18₁, 18₂, 18₃, 18₄) that interfaces with the one or more glass cores (12, 12₁, 12₂, 12₃, 12₄) and one or more intermediate regions (20, 20₁, 20₂, 20₃, 20₄) located between the peripheral region (16) and the one or more interface regions (18, 18₁, 18₂, 18₃, 18₄). Then doping the optical fiber (10) such that the entire glass cladding (14) is doped with alumina or at least one of the peripheral region (16) is doped with alumina, the one or more interface regions (18, 18₁, 18₂, 18₃, 18₄) is doped with alumina and the one or more intermediate regions (20, 20₁, 20₂, 20₃, 20₄) is doped with alumina.

In accordance with an embodiment of the present disclosure, when the optical fiber (10) comprises a single glass core (12), the alumina doping in the intermediate regions (20, 20₁, 20₂, 20₃, 20₄) is distributed among multiple intermediate regions (20, 20₁, 20₂, 20₃, 20₄) or included in combination with alumina doping in at least one of the peripheral region (16) and the one or more interface regions (18, 18₁, 18₂, 18₃, 18₄).

In accordance with an embodiment of the present disclosure, the optical fiber (10) of the present disclosure is utilized in ribbon cables. In particular, the intermittently bonded ribbon cables include intermittently bonded ribbons inside a glass core (12) of the intermittently bonded ribbon cables. Moreover, the intermittently bonded ribbon corresponds to an optical fiber ribbon with a plurality of optical fibers (10) joined at intermittent locations along a longitudinal length of the intermittently bonded ribbon. Further, the intermittent bonding enables the optical fiber ribbon to be flexible and rollable. Also, the intermittent bonding enables high density of optical fiber (10) inside the intermittent bonded ribbon cable.

In accordance with an embodiment of the present disclosure, the reduced diameter optical fiber (10) is used in intermittently bonded ribbon (IBR) cable which significantly improves the packing density of the IBR cable. In particular, the fiber count inside the cable can be increased. Further the additional strength achieved will improves of the overall strength of IBR ribbon and subsequently the strength of the IBR cable.

Advantageously the alumina doping in the peripheral region and/or intermediate regions enhances the strength of the fiber simultaneously improving the stress induced corrosion. In particular, the alumina doping on the one or more interface region of the glass core (12) and the cladding prevents the diffusion of dopants towards the light transmission portion of the glass core (12). Moreover, the addition of down doping agent peripheral region and/or intermediate regions on the glass cladding improves the light leakage loss and increases bend performance of the optical fiber (10). Further, the intermittently bonded ribbon (IBR) made using the above-mentioned optical fiber (10) provides improved mechanical strength.

Additionally, the optical fiber (10) of the present disclosure helps in achieving improved strength and reduced water (H₂O and OH ion) ingression for reduced diameter optical fiber (10). The optical fiber (10) of present disclosure also provides improved strength even in reduced diameter optical fiber (10) and utilization of said optical fiber (10) in intermittently bonded ribbon (IBR) cable significantly improves the overall strength of IBR ribbon thereby improving the packing density and strength of the IBR cable.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber (10) **characterized in that**:
one or more glass cores (12, 12₁, 12₂, 12₃, 12₄) extending along a length of the optical fiber (10); and
a glass cladding (14) surrounding the one or more glass cores (12, 12₁, 12₂, 12₃, 12₄), wherein the glass cladding (14) comprising
(a) a peripheral region (16);
(b) one or more interface regions (18, 18₁, 18₂, 18₃, 18₄) that interfaces with the one or more glass cores (12, 12₁, 12₂, 12₃, 12₄); and
(c) one or more intermediate regions (20, 20₁, 20₂, 20₃, 20₄) located between the peripheral region (16) and the one or more interface regions (18, 18₁, 18₂, 18₃, 18₄);
wherein the optical fiber (10) comprising alumina (Al₂O₃) doping in at least one of
(a) the peripheral region (16);
(b) the one or more interface regions (18, 18₁, 18₂, 18₃, 18₄); and
(c) the one or more intermediate regions (20, 20₁, 20₂, 20₃, 20₄);
provided that, when the optical fiber (10) comprises a single glass core (12), the alumina doping is distributed among at least one of multiple intermediate regions (20, 20₁, 20₂, 20₃, 20₄) or included in combination with alumina doping in at least one of the (a) peripheral region (16) and (b) the one or more interface regions (18, 18₁, 18₂, 18₃, 18₄).

2. The optical fiber as claimed in claim 1, wherein the one or more glass cores (12, 12₁, 12₂, 12₃, 12₄) comprises at least one of:
a single glass core (12) extending along a central axis (22) of the optical fiber (10); or
a plurality of glass cores (12₁, 12₂, 12₃, 12₄), each of the plurality of glass core (12₁, 12₂, 12₃, 12₄) being arranged on a cross section (24₁, 24₂, 24₃, 24₄) parallel to the central axis (22) of the optical fiber (10); or
a plurality of glass cores (12, 12₁, 12₂, 12₃, 12₄) comprising a first glass core (12) extending along a central axis (22) of the optical fiber (10), and each of remaining of the plurality of glass cores (12₁, 12₂, 12₃, 12₄) arranged on a cross section (24₁, 24₂, 24₃, 24₄) parallel to the central axis (22) of the optical fiber (10).

3. The optical fiber as claimed in claim 1, wherein when the optical fiber (10) comprises alumina doping in at least one of the (a) a peripheral region (16); (b) one or more interface regions (18, 18₁, 18₂, 18₃, 18₄); and (c) one or more intermediate regions (20, 20₁, 20₂, 20₃, 20₄), a thickness of a single alumina doped region, as measured in the radial direction, is less than or equal to 7 µm, wherein a concentration of alumina in the alumina doped region is less than or equal to 8 mol%.

4. The optical fiber as claimed in claim 1, comprising a primary coating layer (26) surrounding a peripheral region (16) of the glass cladding (14) and a secondary coating layer (28) surrounding the primary coating layer (26).

5. The optical fiber as claimed in claim 1, wherein a thickness of the primary coating layer (26), as measured in a radial direction, being in the range of 4 µm to 20 µm, wherein a thickness of the secondary coating layer (28), as measured in the radial direction, being in the range of 4 µm to 20µm.

6. The optical fiber as claimed in claim 1, wherein an absolute difference between relative refractive indexes of the peripheral region (16) of the glass cladding (14) and the primary coating layer (26) is less than or equal to 0.2%.

7. The optical fiber as claimed in claim 1, wherein a diameter of the optical fiber (10) excluding a thickness of the primary coating layer (26).

8. The optical fiber as claimed in claim 1, wherein a thickness of the secondary coating layer (28) is in the range of 60 µm to 125 µm with a tolerance of ± 0.7µm and a diameter of the optical fiber (10) including a thickness of the primary coating layer (26).

9. The optical fiber as claimed in claim 1, wherein a thickness of the secondary coating layer (28) is in the range of 100 µm to 250 µm.

10. The optical fiber as claimed in claim 1, wherein:
when the optical fiber (10) comprises, alumina doping at the one or more interface regions (18, 18₁, 18₂, 18₃, 18₄) or at the one or more intermediate regions (20, 20₁, 20₂, 20₃, 20₄), the optical fiber (10) comprises a down-doping agent doped at the peripheral region (16); or
when the optical fiber (10) comprises, alumina doping at the one or more interface regions (18, 18₁, 18₂, 18₃, 18₄) or at the peripheral region (16), the optical fiber (10) comprises one or more intermediate regions (20, 20₁, 20₂, 20₃, 20₄) comprising at least one down-doping agent; or
when the optical fiber (10) comprises, alumina doping at the one or more interface regions (18, 18₁, 18₂, 18₃, 18₄) or at the one or more intermediate regions (20, 20₁, 20₂, 20₃, 20₄) or at the peripheral region (16), the optical fiber comprises at least one down-doped region (30) or at least one up-doped region (32) or at least one non-doped region (34) in the glass cladding (14).

11. The optical fiber as claimed in claim 1, wherein the optical fiber has at least one of:
a mode field diameter (MFD) being in a range of 8.2 µm to 9.5 µm at a wavelength of 1310 nm; and
an attenuation of less than or equal to 0.2 dB/KM at a wavelength of 1550 nm;
a macro bend loss of less than or equal to 0.5 dB/turn at a bend radius of 7.5 mm at a wavelength of 1625 nm;

12. A process for making the optical fiber (10) as claimed in claim 1 **characterized in that** steps of:
providing one or more glass cores (12, 12₁, 12₂, 12₃, 12₄) extending along a length of the optical fiber (10);
providing a glass cladding (14) surrounding the one or more glass cores (12, 12₁, 12₂, 12₃, 12₄), the glass cladding (14) comprising (a) a peripheral region (16); (b) one or more interface regions (18, 18₁, 18₂, 18₃, 18₄) that interfaces with the one or more glass cores (12, 12₁, 12₂, 12₃, 12₄); and (c) one or more intermediate regions (20, 20₁, 20₂, 20₃, 20₄) located between the peripheral region (16) and the one or more interface regions (18, 18₁, 18₂, 18₃, 18₄); and
doping the optical fiber (10) such that
(a) the entire glass cladding (14) is doped with alumina or at least one of
(b) the peripheral region (16) is doped with alumina;
(c) the one or more interface regions (18, 18₁, 18₂, 18₃, 18₄) is doped with alumina; and
(d) the one or more intermediate regions (20, 20₁, 20₂, 20₃, 20₄) is doped with alumina;
provided that, when the optical fiber(10) comprises a single glass core (12), the alumina doping in the intermediate regions (20, 20₁, 20₂, 20₃, 20₄) is distributed among multiple intermediate regions (20, 20₁, 20₂, 20₃, 20₄) or included in combination with alumina doping in at least one of the (a) peripheral region (16) and (b) the one or more interface regions (18, 18₁, 18₂, 18₃, 18₄).

13. An intermittently bonded optical fiber ribbon comprising plurality of optical fiber as claimed in claim 1.

14. An optical fiber (10) comprising alumina doping (Al₂O₃), wherein the alumina doping (Al₂O₃) is selectively distributed in one or more regions of the glass cladding to modify at least one of: mechanical strength, refractive index profile, or dopant diffusion characteristics.

15. The optical fiber (10) as claimed in claim 14 further comprising one or more glass cores (12, 121, 122, 123, 124) extending along a length of the optical fiber (10); and a glass cladding (14) surrounding the one or more glass cores (12, 121, 122, 123, 124), wherein the glass cladding (14) has a peripheral region (16), one or more interface regions (18, 181, 182, 183, 184) adjacent to the one or more glass cores (12, 121, 122, 123, 124) and one or more intermediate regions (20, 201, 202, 203, 204) between the peripheral region (16) and the one or more interface regions (18, 181, 182, 183, 184), wherein at least one region of the glass cladding (14) is doped with alumina (Al₂O₃).
